# EUROPEAN PATENT APPLICATION

(11) **EP 3 272 825 A1**
(43) Date of publication of application: **24.01.2018**
(21) Application number: 17001232.2
(22) Date of filing: 19.07.2017
(51) Int. Cl.: C09J 103/02, C09J 101/02, C09J 105/00, D21H 17/67, C08K 3/26

(54) **ADHESIVE COMPOSITION**

(30) Priority: 19.07.2016 GB 201612538
(71) Applicant: Pool, Robin Anthony, Brixworth, Northamptonshire NN6 9TZ (GB)
(72) Inventor: Pool, Robin Anthony, Brixworth, Northamptonshire NN6 9TZ (GB)
(74) Representative: Banford, Jonathan

(57) **Abstract**

A latex-free liquid adhesive composition for use in the manufacture of corrugated cardboard comprises a polymeric carbohydrate compound, such as a natural starch, and a basic zirconium and/or hafnium salt, such as ammonium zirconium carbonate or potassium zirconium carbonate, for example at a level of 0.1% to 1.0% calculated as zirconium dioxide by weight on dry polymeric carbohydrate compound. The adhesive composition performs at least as well as existing adhesive compositions in existing equipment for corrugated cardboard manufacture, without requiring the presence of boron compounds, about which toxicity questions have been raised.

## Description

The present invention relates to the field of adhesives for paper, card or the like. More particularly but not exclusively, it relates to adhesive compositions for use in the manufacture of corrugated cardboard.

The product conventionally known as corrugated cardboard or corrugated board has been known for over a hundred years, and is still very widely used as a packaging material, due to its relative cheapness, strength, protective effect and ease of recycling. The product most widely used is made from sheet materials that are more correctly referred to as "paper" rather than "cardboard", in particular Kraft paper. However, the terms "corrugated cardboard" and "corrugated board" remain as the conventional terms.

Corrugated cardboard is usually made from a core layer of Kraft paper or the like, corrugated or fluted to form a series of parallel corrugations with a substantially sinusoidal profile, the height of the corrugations being similar to the separation between neighbouring corrugations. (Variations of this profile exist, giving different board thicknesses and mechanical properties, but the basic principle remains the same. This core layer is sandwiched between two flat outer layers of Kraft paper or the like, sometimes with the addition of an outermost sheet of higher-quality paper carrying decorative material. In some products, only one outer layer of Kraft paper is applied to one side of the core layer, leaving the product significantly more flexible and easier to wrap round curves than the more common substantially rigid corrugated cardboard made with an outer layer of Kraft paper on each side of the core layer. (Conversely, multi-layer structures are known, but these still comprise alternating flat and corrugated layers).

The flat outer layer or layers are attached to the corrugated core layer using adhesives. As described in more detail with reference to the Figures below, a liquid adhesive composition is applied to an upper face of a crest of each corrugation and to a lower face of a trough of each corrugation. The adhesive allows the flat outer layers to be tacked on to the core layer. Subsequent heating drives off water, and the adhesive sets, producing the corrugated cardboard sheet.

The adhesives used are generally natural starches with little or no chemical modification. More modern adhesives, such as polyacrylates, in solution or in the form of a latex, would be effective, but would be too expensive for conventional corrugated board products.

Currently, it is standard practice to add measured small amounts of boron compounds to the liquid starch adhesives. This both modifies the adhesives' flow properties and tackiness as liquids, and improves their effectiveness when dry. However, these boron compounds are falling out of favour because of possible toxicity issues, both safety issues from handling boron compounds in bulk when making up the adhesive, and the classification of many boron compounds under REACH Regulations as "Harmful for Reproduction", making them unacceptable at any level in corrugated board for food-contact applications, such as boxes for transporting fresh fruit and vegetables.

According to a first aspect of the present invention, there is provided a liquid, latex-free adhesive composition for use in the manufacture of corrugated cardboard, comprising an aqueous solution or dispersion of a polymeric carbohydrate compound and a basic zirconium and/or hafnium salt.

Preferably, the polymeric carbohydrate compound comprises a naturally-occurring carbohydrate polymer.

Advantageously, the polymeric carbohydrate compound comprises a natural starch.

Preferably, the basic zirconium and/or hafnium salt comprises a basic zirconium carbonate.

Advantageously, the basic zirconium and/or hafnium salt comprises ammonium zirconium carbonate (AZC).

Alternatively, the basic zirconium and/or hafnium salt comprises potassium zirconium carbonate.

Preferably, the adhesive composition contains from 0.1% to 5.0% basic zirconium carbonate, calculated by weight on dry polymeric carbohydrate compound.

Advantageously, the adhesive composition contains at least 1.0% basic zirconium carbonate, calculated by weight on dry polymeric carbohydrate compound.

Preferably, the adhesive composition contains from 0.1% to 1.0% basic zirconium carbonate calculated as ZrO₂ content by weight on dry polymeric carbohydrate compound.

Advantageously, the adhesive composition contains from 0.3% to 0.8% basic zirconium carbonate, calculated as ZrO₂ content by weight on dry polymeric carbohydrate compound.

According to a second aspect of the present invention, there is provided a method of preparing a liquid, latex-free adhesive composition for use in the manufacture of corrugated cardboard, comprising the steps of providing a polymeric carbohydrate compound, providing a basic zirconium and/or hafnium salt and forming an aqueous solution or dispersion containing the polymeric carbohydrate compound and the basic zirconium and/or hafnium salt.

Preferably, the method comprises the steps of forming a solution or dispersion of the polymeric carbohydrate compound in water and dispersing the basic zirconium and/or hafnium salt into said solution or dispersion.

Alternatively, the method may comprise the steps of mixing the polymeric carbohydrate compound and the basic zirconium and/or hafnium salt to form a blend and then dispersing said blend into water to form the aqueous solution or dispersion.

Preferably, the basic zirconium and/or hafnium salt is added as an aqueous solution.

Preferably, the basic zirconium and/or hafnium salt comprises a basic zirconium carbonate.

Advantageously, the basic zirconium and/or hafnium salt comprises ammonium zirconium carbonate (AZC).

Preferably, the adhesive composition comprises from 0.1% to 5.0% basic zirconium and/or hafnium salt, calculated by weight in dry polymeric carbohydrate compound.

Advantageously, the adhesive composition comprises at least 1.0% basic zirconium and/or hafnium salt, calculated by weight on dry polymeric carbohydrate compound.

Preferably, the adhesive composition comprises from 0.1% to 1.0% basic zirconium carbonate, calculated as ZrO₂ content by weight on dry polymeric carbohydrate compound.

Advantageously, the adhesive composition comprises 0.3% to 0.8% basic zirconium carbonate, calculated as ZrO₂ content by weight on dry polymeric carbohydrate compound

Preferably, the polymeric carbohydrate compound comprises a naturally-occurring carbohydrate polymer.

Advantageously, the polymeric carbohydrate compound comprises a natural starch.

The liquid adhesive composition may comprise a liquid adhesive composition as described in the first aspect, above.

According to a third aspect of the present invention, there is provided a method for manufacturing corrugated cardboard, comprising the steps of providing a corrugated sheet of paper or card having a plurality of parallel corrugations defining a plurality of crests and a plurality of troughs; providing a first flat sheet of paper or card; providing a liquid adhesive composition; applying the liquid adhesive composition along each of said plurality of crests; applying the first flat sheet to the corrugated sheet such that the liquid adhesive composition on the plurality of crests joins said crests to the first flat sheet; and applying heat to dry and set the liquid adhesive composition, wherein the liquid adhesive composition comprises an aqueous solution of a polymeric carbohydrate compound and a basic zirconium and/or hafnium salt.

Preferably, the method comprises the further steps of providing a second flat sheet of paper or card; applying the liquid adhesive composition along each of the plurality of troughs of the corrugated sheet; and applying the second flat sheet to the corrugated sheet such that the liquid adhesive composition on the plurality of troughs joins said troughs to the second flat sheet, prior to said heat application step.

The liquid adhesive composition may comprise the liquid adhesive composition described in the first aspect above.

The liquid adhesive composition may be prepared as described in the second aspect above.

According to the fourth aspect of the present invention, there is provided corrugated cardboard containing an adhesive composition, wherein the adhesive composition comprises a polymeric carbohydrate compound and a basic zirconium and/or hafnium salt.

The corrugated cardboard may comprise an adhesive composition as described in the first aspect above.

The corrugated cardboard may comprise an adhesive composition prepared by the method described in the second aspect above.

The corrugated cardboard may have been manufactured by the method described in the third aspect above.

Embodiments of the present invention will now be more particularly described by way of example and in part with reference to the accompanying drawings, in which:
**Figure 1** is a schematic isometric view of part of a typical sheet of corrugated cardboard; and
**Figure 2** is a schematic frontal elevation of a sheet of corrugated cardboard embodying the present invention.

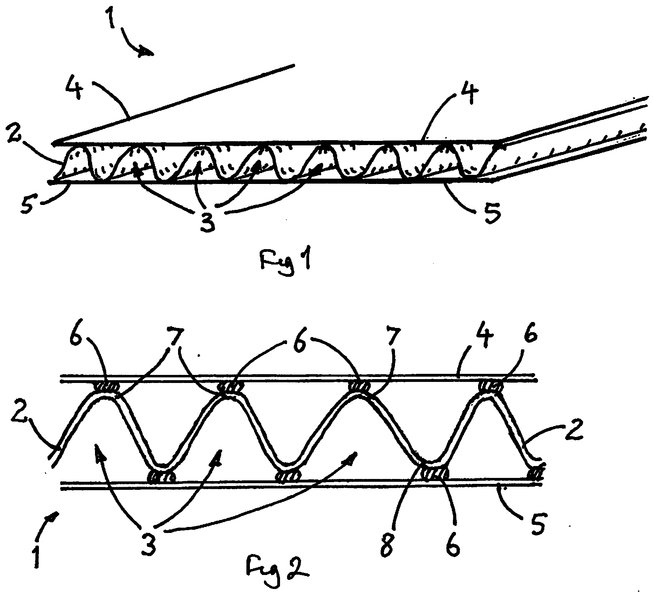

Referring now to the Figures, and to Figure 1 in particular, a typical sheet of corrugated cardboard 1 comprises a core corrugated sheet 2 of Kraft paper or the like, which is folded or fluted into a series of flutes or corrugations 3. The corrugations 3 each extend from to a first end of the corrugated sheet 2, each in parallel to the others, to a second end of the corrugated sheet 2 remote from the first. The corrugations 3 extend substantially orthogonally to each of the first and second ends of the sheet 2. Each corrugation 3 has substantially the same peak-to-trough amplitude and each has substantially the same width, peak-to-peak or trough-to-trough, as the others. The corrugated sheet 2 as a whole is thus generally planar, with an upper surface comprising the peaks of the corrugations 3 and a lower surface comprising the troughs of the corrugations 3, and an overall thickness defined by the corrugation peak-to-trough amplitude.

In most corrugated cardboard 1, the core corrugated sheet 2 is sandwiched between two planar outer sheets 4, 5 of Kraft paper or the like, an upper sheet 4 mounted to the upper surface of the core corrugated sheet 3, and a lower sheet 5 mounted to the lower surface of the core corrugated sheet 3. The resulting corrugated cardboard 1 has a significant stiffness, strength, resilience and puncture resistance, making it suitable for packaging material intended for (moderately) rough handling and a wide range of other uses.

Some corrugated cardboard (not shown) is made with only a single planar outer sheet 4 mounted to one surface of the core corrugated sheet 3. This form of corrugated cardboard is less stiff and strong, but is easier to wrap around rounded, specially generally cylindrical objects.

In either case, the performance of the corrugated cardboard 1 depends significantly on the quality of the mounting or bond between the outer sheets 4, 5 and the upper and lower surfaces, respectively, of the core corrugated sheet 3. This mounting arrangement is shown in Figure 2.

The corrugated cardboard 1 is held together by adhesive 6 extending in strips between the upper surface of each peak 7 of each corrugation 3 and an adjacent surface of the upper sheet 4, and between the lower surface of each trough 8 of each corrugation 3 and an adjacent surface of the lower sheet 5.

Corrugated cardboard 1 is a generally low-cost material, and so the adhesive 6 is generally based on relatively cheap materials, such as natural starches, rather than polyacrylates (including polyacrylate latices) or other high-performance modern adhesives. Aqueous starches can be prepared with flow properties making them easy to apply (typically along the peaks and troughs of the corrugated sheet 3). They readily wet the Kraft paper or other porous fibre-based materials of the core 3 and outer 4, 5 sheets, enhancing adhesion, and they are reasonably strong when gelled and dried to solid form.

To enhance their performance; such adhesives currently include a small amount of a boron compound, typically borax. The boron compound functions as a viscosity stabiliser, a "tackifier" to encourage wet adhesion, and as a hardening agent after the adhesive has gelled on heating. Unfortunately, the use of boron compounds is becoming less acceptable.

A common use for corrugated board is the transportation of fresh fruit and vegetables, as well as some meat and fish products, from the source to the end user. The fruit and vegetables are usually carried in direct contact with the corrugated board packaging, and historically the contact layer of the board has therefore been made from virgin, un-recycled fibre. Even so, this fibre has been pulped and extensively treated with various chemical reagents. There is no completely authoritative list of chemicals considered safe for use in such papers, although lists published by the FDA in the USA and the BfR in Germany are widely accepted, listing materials that are "generally regarded as safe". The adhesive holding the corrugated cardboard together is on the opposite side of the contact layer of paper to the goods being conveyed, and its position relative to these lists for food contact materials has never been fully clarified. However, once the adhesive has been applied to the contact paper layer, it is impossible to separate it therefrom, so the adhesive should be considered part of the packaging material. Starch itself is widely used as a component of paper, so is already listed, and simple reagents such as caustic soda are considered safe as they can be completely neutralised. However, borax and related compounds such as boron oxide or boric acid have recently been re-classified as "Harmful for Reproduction" under the EU REACH regulations. As a result, the paper layer in contact with the foodstuffs is now considered to contain small but detectable amounts of boron compounds that can never be listed as acceptable for food contact. Despite the long history of borax in these adhesives, its replacement is now highly desirable.

The adhesives embodying the present invention therefore omit any boron compounds. They are based on natural carbohydrate polymers, typically natural starches from wheat, maize (US corn), tapioca, peas, potatoes, rice or sorghum. Depending on the detailed preferences of the formulator, unmodified starches may be used, or all or part of the starch in a formulation may be modified, including (but not limited to) esters, ethers, cross-linked, acid-modified, oxidised, or cold-soluble natural starches, or starches having more than one of these modifications. Blends of different starches may be used. Starches from hybrid or genetically modified starches are also used, such as from high amylose corn, waxy maize, waxy potatoes and so forth. It is also possible to use flours made from the same cereal or root sources, such as maize polenta, wheat flour, pea flour and so forth, produced by dry grinding methods.

The skilled formulator in this field is accustomed to selecting from such a range of starches, modified starches and flours, and knows a variety of mixing and dispersing techniques to produce the required aqueous adhesive compositions. A common theme is for part of the starch to be dispersed in warm water in the presence of a fixed amount of caustic soda (sodium hydroxide). This produces a concentrated solution into which the remainder of the starch and the water is mixed. In effect, this initial concentrated solution acts as a dispersant for starch particulates, since complete dissolution of the starch at this stage would lead to impractically high viscosities. It is only when the adhesive is heated to dry it after application that the bulk of the starch dissolves; this actually leads to the formation of a non-flowable gel structure, and the gelation temperature at which this occurs is an important feature of an adhesive formulation.

As noted above, the skilled person has for decades also included borax and other boron compounds in such adhesive compositions, as a viscosity stabiliser, a tackifier and/or to harden and strengthen the compositions after gelatinisation. In the present invention, however, it has been established that alkali-soluble zirconium compounds (or their chemically very similar hafnium analogues) are unexpectedly effective as replacements for boron compounds. The alkali-soluble zirconium and/or hafnium compounds have very similar effects to borax, etc, on the viscosity stability and tackiness of the wet adhesives and hardening/strengthening of the heated, gelled, dried adhesives.

The most advantageous of these compounds is found to be AZC, ammonium zirconium carbonate, although potassium zirconium carbonate is also highly effective. AZC is fully stable only in basic aqueous solution, and is typically supplied as a concentrated alkaline solution, with a zirconium content of about 20% by weight, expressed as ZrO₂.

There are no significant health hazards known to be associated with zirconium compounds (solid zirconia powder is not to be breathed in as dust, but this is almost certainly due to the powder's high hardness and abrasivity in the airway; in any case, zirconia is neither used nor formed in the systems of the present invention). Parts per million levels of zirconium are naturally present in many foodstuffs and in the human body, although it is not known to be involved in any biological processes. Significant quantities of zirconium compounds are used in anti-perspirants and deodorants, and zirconium compounds are used in dental and joint prostheses. If zirconium salts do react, they tend to form highly insoluble and inert zirconyl (ZrO²⁺) compounds. Thus, it is extremely unlikely that the presence of zirconium-based compounds in starch adhesives would lead to any safety concerns, even for food contact products. As far as production staff are concerned, AZC solutions will be no more hazardous than the caustic soda that they already handle routinely.

Starch-based adhesives containing basic zirconium and/or hafnium compounds can be produced using standard methods. Three examples are set out below:

| Example 1 (laboratory scale) | |
|---|---|
| Native wheat starch | 23g |
| Water at 32°C | 250g |
| 30% w/w sodium hydroxide solution | 8g |
| Water at 32°C | 280g |
| AZC solution (20% w/w ZrO₂) | 6g |
| Wheat starch | 146g |

The initial quantity of native wheat starch was mixed into the first quantity of warmed water, with the sodium hydroxide solution then being added under mixing. Mixing continued until a stable free-flowing starch solution was produced. The second quantity of warmed water was then added, and after a few minutes further mixing, this was followed by the AZC solution and the final quantity of wheat starch. Mixing was continued until a homogeneous, stable solution/dispersion was produced.

The viscosity was determined with a "Love" flow cup (measuring the time for a standard volume of liquid to flow out of the cup, under gravity, through a precisely-machined standardised aperture), giving a result of 18 seconds. The gelation temperature was determined as 57°C, and the dry matter content of the composition determined by conventional oven-drying techniques was 21.7% by weight. These properties are all highly suitable for an adhesive composition for use in modern highspeed corrugating equipment.

After 48 hours storage at 32°C, the liquid adhesive composition was reconstituted by stirring for 20 minutes, and the viscosity was determined as 22 seconds. This is excellent viscosity stability - some compositions would have become unusably thick after such storage.

| Example 2 (commercial scale) | |
|---|---|
| Water at 30°C | 330litres |
| Unmodified wheat starch | 18kg |
| 50% w/w sodium hydroxide solution | 8.1kg |
| Water (cold) | 300litres |
| AZC solution (20% w/w ZrO2) | 10kg |
| Unmodified wheat starch | 90kg |
| 50% w/w sodium hydroxide solution | 3.2kg |
| 50% w/w sodium hydroxide solution | 1.7kg |
| Water (cold) | 70litres |
| Unmodified wheat starch | 174kg |

The initial batch of 330 litres of water were heated to 30°C in a cylindrical mixing vessel of conventional form, designed for mixing standard (prior art) commercial batches of starch-based corrugated board adhesive. To this was added the initial 18kg batch of standard quality unmodified wheat starch, with stirring, followed by 8.1kg of a 50% by weight commercial caustic soda (sodium hydroxide) solution. This mixture was stirred for 100 seconds, then 300 litres of cold water were added. The result was then re-heated to 30°C. Once up to temperature, 10kg of ammonium zirconium carbonate (AZC) solution (at 20% by weight zirconium dioxide content) was added with stirring.

The second, 90kg batch of wheat starch was then added, followed by a further 3.2kg of 50% by weight caustic soda solution.

This mixture was continuously stirred while its viscosity was monitored, using a standard commercial viscosity monitor, the MIV7000 inline viscometer manufactured by Sofraser operating on a standard viscosity control program, as used for existing starch-based adhesive manufacture. During this control phase, a further 1.7kg of 50% by weight caustic soda solution was added in steps of 400 to 500 grams. During this phase, the measured viscosity of the adhesive increased from a starting value of 8 units, up to a target value of 22 units, the same as for a standard recipe. At the target viscosity of 22 units, 70 litres of cold water was added, followed by a further 174kg of wheat starch. The batch was then stirred for a further 300 seconds.

The viscosity was then tested, using the industry standard flow cups. The viscosity was 54 seconds at the final batch temperature of 34°C using a "Steinhall" flow cup and 18 seconds using a "Love" flow cup (both the Steinhall and Love flow cups are well known in this technical sector, to those versed in the art). These viscosity values are typical for existing, widely used adhesive recipes. The gelation temperature was determined as 54°C.

This adhesive composition ran completely normally on a conventional corrugator, producing good quality board at standard industry speeds of 250 metres per minute on C profile board having a total board weight of 510g per square metre.

| Example 3 (laboratory scale) | |
|---|---|
| Cold-soluble tapioca starch | 18g |
| Native tapioca starch | 150g |
| Anhydrous sodium carbonate powder | 4.2g |
| Calcium hydroxide powder | 3g |
| Potassium zirconium carbonate solution (20% w/w ZrO₂) | 3g |
| Water at 28° | 500g |

In this formulation, cold-soluble tapioca starch is used, so it is not necessary to dissolve a portion of the starch as a first step; presumably, the cold-soluble tapioca starch can dissolve rapidly to form a dispersant for the remainder of the starch.

The cold-soluble tapioca starch, the native tapioca starch, the sodium carbonate powder and the calcium hydroxide powder were mixed together dry in a conventional powder blender until homogeneous. The potassium zirconium carbonate solution was then added dropwise to this powder blend, with mixing, until the liquid was fully dispersed and absorbed into the powder mixture. This powder mixture was then added under stirring into the warmed water, and stirred further until a stable consistency/viscosity was achieved.

The "Steinhall" flow cup viscosity of the resulting adhesive compositions was 36 seconds, the gelation temperature was 61° C and the dry matter content (oven drying method) was 25.3% by weight. All these values are well within the required parameters for an adhesive for corrugated card manufacture.

Note: in each of the above examples, known finishing agents such as biocides and/or anti-foams can be added if desired, as can known additions such as those designed to improve water resistance in the finished, gelled, dried adhesive.

While the above examples are set out using AZC, ammonium zirconium carbonate, or potassium zirconium carbonate as sources of zirconium, the invention is believed to work just as well with a source of hafnium. Indeed, commercial zirconium reagents frequently contain a small percentage of hafnium, due to the similar chemical properties of zirconium and hafnium and the difficulty of separating them completely.

## Claims

1. A liquid, latex-free adhesive composition for use in the manufacture of corrugated cardboard, comprising an aqueous solution or dispersion of a polymeric carbohydrate compound and a basic zirconium and/or hafnium salt.

2. An adhesive composition as claimed in claim 1, wherein the polymeric carbohydrate compound comprises a natural starch.

3. An adhesive composition as claimed in either claim 1 or claim 2, wherein said basic zirconium and/or hafnium salt comprises a basic zirconium carbonate.

4. An adhesive composition as claimed in any one of the preceding claims, wherein said basic zirconium and/or hafnium salt comprises ammonium zirconium carbonate (AZC).

5. An adhesive composition as claimed in any one of claims 1 to 3, wherein said basic zirconium and/or hafnium salt comprises potassium zirconium carbonate.

6. An adhesive composition as claimed in claim 3, containing from 0.1% to 5.0% basic zirconium carbonate, calculated by weight on dry polymeric carbohydrate compound.

7. An adhesive composition as claimed in claim 3, containing from 0.1% to 1.0% basic zirconium carbonate calculated as ZrO₂ content by weight on dry polymeric carbohydrate compound.

8. A method of preparing a liquid, latex-free adhesive composition for use in the manufacture of corrugated cardboard, comprising the steps of providing a polymeric carbohydrate compound, providing a basic zirconium and/or hafnium salt and forming an aqueous solution or dispersion containing the polymeric carbohydrate compound and the basic zirconium and/or hafnium salt.

9. A method of preparing an adhesive composition as claimed in claim 8, comprising the additional steps of forming a solution or dispersion of the polymeric carbohydrate compound in water and dispersing the basic zirconium and/or hafnium salt into said solution or dispersion.

10. A method of preparing an adhesive composition as claimed in claim 9, comprising the additional steps of mixing the polymeric carbohydrate compound and the basic zirconium and/or hafnium salt to form a blend and then dispersing said blend into water to form the aqueous solution or dispersion.

11. A method of preparing an adhesive composition as claimed in any one of claims 8 to 10, wherein the basic zirconium and/or hafnium salt comprises a basic zirconium carbonate.

12. A method of preparing an adhesive composition as claimed in any one of claims 8 to 11, wherein the polymeric carbohydrate compound comprises a natural starch.

13. A method for manufacturing corrugated cardboard (1), comprising the steps of providing a corrugated sheet of paper or card (2) having a plurality of parallel corrugations (3) defining a plurality of crests (7) and a plurality of troughs (8); providing a first flat sheet of paper or card (4); providing a liquid adhesive composition (6); applying the liquid adhesive composition (6) along each of said plurality of crests (7); applying the first flat sheet (4) to the corrugated sheet (2) such that the liquid adhesive composition (6) on the plurality of crests (7) joins said crests (7) to the first flat sheet (4); and applying heat to dry and set the liquid adhesive composition (6), wherein the liquid adhesive composition (6) comprises an aqueous solution of a polymeric carbohydrate compound and a basic zirconium and/or hafnium salt.

14. A method for manufacturing corrugated cardboard as claimed in claim 13, comprising the further steps of providing a second flat sheet of paper or card (5); applying the liquid adhesive composition (6) along each of the plurality of troughs (8) of the corrugated sheet (2); and applying the second flat sheet (5) to the corrugated sheet (2) such that the liquid adhesive composition (6) on the plurality of troughs (8) joins said troughs (8) to the second flat sheet (5), prior to said heat application step.

15. Corrugated cardboard (1) containing an adhesive composition, wherein the adhesive composition comprises a polymeric carbohydrate compound and a basic zirconium and/or hafnium salt.
